# EUROPÄISCHE PATENTSCHRIFT

(11) **EP 3 105 483 B1**
(45) Veröffentlichungstag und Bekanntmachung des Hinweises auf die Patenterteilung: **31.01.2018**
(21) Anmeldenummer: 15704716.8
(22) Anmeldetag: 06.02.2015
(51) Int. Cl.: F16L 3/10, F16L 3/16, F16L 3/22, F16L 55/035

(54) **SCHELLE**
CLAMP
BRIDE DE FIXATION

(30) Priorität: 10.02.2014 DE 202014001238 U
(43) Veröffentlichungstag der Anmeldung: 21.12.2016
(73) Patentinhaber: Liebherr-Werk Nenzing GmbH, 6710 Nenzing (AT)
(72) Erfinder: NESSLER, Wolfgang, 6751 Ausserbraz (DE)
(74) Vertreter: Laufhütte, Dieter
(86) Internationale Anmeldenummer: PCT/EP2015/000250
(87) Internationale Veröffentlichungsnummer: WO 2015/117763

(56) Entgegenhaltungen:
- DE-A1- 19 628 689
- DE-A1-102007 052 559
- DE-U- 7 414 626
- DE-U- 7 423 062
- DE-U1- 8 901 984
- DE-U1- 9 003 030
- GB-A- 1 499 653
- JP-U- S 537 821
- US-A- 3 531 071
- US-A1- 2007 176 057
- US-A1- 2010 308 183

## Beschreibung

Die vorliegende Erfindung betrifft eine Schelle, insbesondere eine Kunststoffschelle, zur Befestigung von mindestens einer Schlauch- und/oder Rohrleitung oder Ähnlichem mit einer Längsachse gemäß Anspruch 1.

Schellen zur Befestigung von Schlauch- oder Rohrleitungen sind bereits bekannt. Diese bestehen aus zwei Klemmkörpern, die miteinander mittels Aufbauschrauben verbindbar sind. Die Klemmkörper weisen aneinander angrenzende Auflageflächen auf, zwischen welchen eine Durchgangsöffnung zum Hineinführen und Befestigen der mindestens einen Schlauch- und/oder Rohrleitung gebildet ist.

Solche Schellen können neben- oder übereinander angeordnet sein, so dass mehrere Durchgangsöffnungen für Leitungen in nebeneinanderliegender Anordnung zur Verankerung beispielsweise von Hydraulikleitungen bei Baumaschinen geschaffen werden können. Angesichts dessen, dass durch die Schelle hohe mechanische Belastungen aufzunehmen sind und diese eine ausreichende Betriebssicherheit gewährleisten sollten, sind nicht nur an die Werkstoffwahl für die Klemmkörper sondern auch an die Befestigung der Schelle sehr hohe Anforderungen zu stellen. US2010/0308183 offenbart den Oberbegriff von Anspruch 1. Um die Sicherheit und die Stabilität der bisher bekannten Schellen zu erhöhen, bestehen diese aus vielen Einzelteilen, was zu hohen Herstellungskosten führt.

Des Weiteren ist beim Einsatz von Schlauchhalterungen die Volumenzunahme, in dem Fall die Durchmesseränderung des Schlauches unter Druck zu berücksichtigen. Durch die Schlauchbewegung kann eine Scheuerwirkung auf ihn selbst und auf der Außenschicht der Schelle entstehen, wodurch beide langfristig zerstört werden können.

Um die Stabilität von Kunststoffschellen zu erhöhen, werden Zwischen- und Deckplatten verwendet, was zu einem komplexen Aufbau führt und auch kostspielig ist.

Aufgabe der vorliegenden Erfindung ist es daher, eine Schelle, insbesondere eine Kunststoffschelle bereitzustellen, die eine sichere Verankerung der zu haltenden Leitungen gewährleistet und zugleich einfach und kostengünstig in ihrer Herstellung und Montage ist, wobei sie gleichzeitig eine schonende Befestigung des Schlauchs ermöglichen soll.

Diese Aufgabe wird erfindungsgemäß durch eine Schelle mit den Merkmalen des Anspruchs 1 gelöst.

Die erfindungsgemäße Schelle weist in an sich bekannter Weise zwei identische Klemmkörper auf, die miteinander mittels Aufbauschrauben verbindbar sind, wobei die Klemmkörper aneinander angrenzende Auflageflächen aufweisen, zwischen welchen eine Durchgangsöffnung zum Hineinführen und Befestigen der mindestens einen Schlauch- und/oder Rohrleitung gebildet ist. Erfindungsgemäß weist die Innenfläche der Durchgangsöffnung einen elliptischen Querschnitt entlang der Längsachse auf. Die Durchgangsöffnung weist somit erfindungsgemäß keine Kante auf, die zu einer Beschädigung der hineinzuführenden und festzuhaltenden Leitung führen könnte. Weiterhin weisen die Aufbauschrauben erfindungsgemäß einen Schraubenkopf auf, der aus je einem Zylinder, welcher in einen Mehrkant übergeht, besteht. Die Klemmkörper weisen dabei korrespondierende Innenmehrkant-Öffnungen auf, die nicht nur als Verdrehsicherung sondern auch zu einer teilweisen Aufnahme des Mehrkants, d.h. Mehrkantkopfes, der Aufbauschrauben dienen. Die Aufbauschrauben erstrecken sich somit von der Oberfläche der Schelle nur soweit hinaus, um eine weitere Schelle an die erste oder einer Abdeckung anzubringen und zu befestigen. Es ist auch nicht mehr notwendig, ein Sicherungsblech, welches Mehrkanntöffnungen aufweist, zwischen dem oberen Klemmkörper und einer weitere mit der ersten verbindbaren Schelle bzw. einer Abdeckung zu verwenden, was die Konstruktion der Schelle und die Montage- sowie Herstellungskosten reduziert. Die besondere Verschraubung, nämlich Schrauben, welche im Bereich des Schraubenkopfes aus einem Zylinder und einem Mehrkant bestehen und somit eine kombinierte Kopfausführung aufweisen, reduziert sich ebenfalls im Vergleich zu den bisher bekannten Lösungen auf nur einen optimierten Schraubentyp. Somit entfallen die bisher verwendeten Inbusschrauben und Deck- bzw. Zwischenplatten, so dass die Schelle vereinfacht wird.

Vorzugsweise besteht die erfindungsgemäße Schelle aus einem elastomeren Material, besonders vorteilhaft aus einem elastomeren Material für Tieftemperatureinsatz (z.B. < - 20° C). Somit können die in der hineingeführten Leitung entstehenden Vibrationen, die beispielsweise durch den pulsierenden Ölstrom entstehen, absorbiert werden, so dass die Leitungen geschont werden. Auch die Außenschicht der Schelle wird langfristig vor Zerstörung geschützt.

Eine besonders bevorzugte Ausführungsform der erfindungsgemäßen Schelle sieht vor, die Durchgangsöffnung mit Rillen zu versehen. Diese können sich in bevorzugter Weise in Axialrichtung der zu befestigenden Schlauch- und/oder Rohrleitung hin erstrecken. Durch die Rillen wird die hineinführende Leitung besser von der Schelle gehalten. Des Weiteren kann durch die Rillen das Ansammeln von stehendem Wasser bei vertikaler Montage verhindert werden. Sie dienen auch zur Vorbeugung gegen Kontakt- und Spaltkorrosion.

Vorzugsweise erstrecken sich die Aufbauschrauben im Bereich des Schraubenkopfs, welcher aus einem Zylinder und einem Mehrkant besteht, teilweise von einer Auflagefläche des oberen Klemmkörpers hinaus, so dass eine weitere Schelle an die erste anbringbar und befestigbar ist. Es ist auch möglich weitere Schellen an die zweite zu befestigen, so dass beliebig viele Leitungen an einer Schellenkonstruktion angebracht und von dieser festgehalten werden können.

Die Aufbauschrauben weisen vorzugsweise im Bereich des Schraubenkopfes je eine Öffnung mit einem Innengewinde auf, die zur Befestigung einer weiteren Schelle mittels Aufbauschrauben dient, die wiederrum am unteren Teil ein Gewinde aufweisen, so dass sie mit dem Innengewinde des Schraubenkopfes der Aufbauschrauben der ersten Schelle verschraubbar sind.

Vorzugsweise ist die Schelle, bzw. die untere Schelle bei einer Mehrschellenanordnung, auf einer Befestigungsplatte anbringbar und mittels der Aufbauschrauben befestigbar, wobei die Befestigungsplatte entsprechende Muttern aufweist. Somit kann die einzelne Schelle oder die ganze Schellenanordnung nur mit einer Befestigungsplatte an die dafür vorgesehene Stelle in der Baumaschine befestigt werden.

Durch die besondere Ausbildung der Aufbauschrauben ist es möglich auf einer Auflagefläche des oberen Klemmkörpers der Schelle oder der letzten in einer Schellenanordnung angebrachten Schelle eine Abdeckung anzubringen, die durch eine Schnappverbindung mit der Schelle lösbar befestigbar ist. Somit wird die Schelle auf eine sehr einfache und kostengünstige Weise abgedeckt und die Schraubenköpfe vor Verdrehung, Korrosion und Beschädigung geschützt.

Es wird als besonders bevorzugt angesehen, wenn auf der Innenseite der Abdeckung zwei Innenmehrkantaufnahmen ausgebildet sind, die mit dem von der Auflagefläche des oberen Klemmkörpers hinausragenden Mehrkant der Aufbauschrauben eine Schnappverbindung bilden.

Vorzugsweise weist zumindest einer der Klemmkörper von seiner Auflagefläche ausgehend je eine integrierte Metallhülse zum Hineinführen der Aufbauschraube auf, was die Stabilität der Verbindung erhöht.

Die vorliegende Erfindung wird nun anhand eines Ausführungsbeispiels und der Zeichnung näher erläutert. Es zeigen:
- Figur 1:: eine Explosionsdarstellung einer erfindungsgemäßen Schelle gemäß einer bevorzugten Ausführungsform;
- Figur 2:: eine vergrößerte Darstellung einer Aufbauschraube der erfindungsgemäßen Schelle gemäß Figur 1;
- Figur 3:: eine perspektivische Darstellung der Abdeckung der erfindungsgemäßen Schelle gemäß Figur 1;
- Figur 4:: eine perspektivische Darstellung der erfindungsgemäßen Schelle gemäß Figur 1 im zusammengebauten Zustand;
- Figur 5:: eine Schnittdarstellung der Schelle entlang der Linie A-A gemäß Figur 4;
- Figur 5a:: eine Schnittdarstellung einer abgewandelten Schelle entsprechend Figur 5;
- Figur 6:: eine Schnittdarstellung der Schelle entlang der Linie B-B gemäß Figur 5;
- Figur 7:: eine perspektivische Darstellung der erfindungsgemäßen Schelle ohne Aufbauschrauben;
- Figur 8:: eine perspektivische Darstellung der erfindungsgemäßen Schelle gemäß einer zweiten Ausführungsform ohne Aufbauschrauben;
- Figur 9:: eine perspektivische Darstellung zweier erfindungsgemäßen Schellen mit einer Rohrleitung;
- Figur 10:: eine perspektivische Darstellung einer Schellenanordnung mit zwei Rohrleitungen;
- Figur 11:: eine perspektivische Darstellung einer Schellenanordnung mit drei Rohrleitungen und
- Figur 12:: eine perspektivische Darstellung einer Bodenplatte für eine Schellenanordnung mit drei Rohrleitungen entsprechend Figur 11.

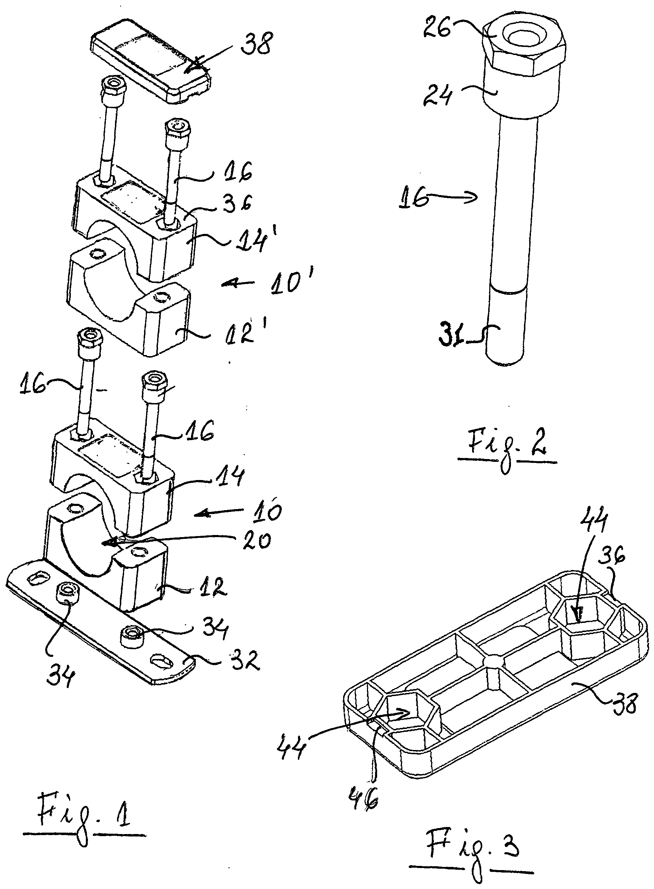

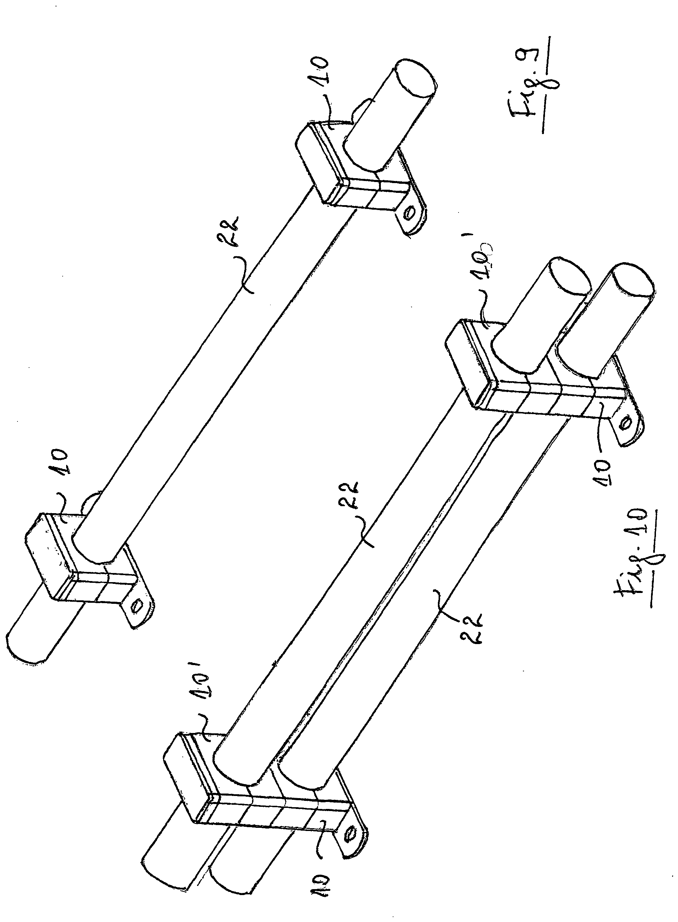

Figur 1 zeigt eine Explosionsdarstellung einer erfindungsgemäßen Schelle 10, die aus zwei identischen Klemmkörpern 12, 14 besteht, welche aufeinander angebracht und mittels zwei Aufbauschrauben 16 miteinander befestigt werden, so dass zwischen den beiden Klemmkörpern 14, 16 eine Durchgangsöffnung 20 entsteht. Die Durchgangsöffnung 20 dient zum Hindurchführen und Befestigen einer Schlauch- und/oder Rohrleitung 22, wie dies in den Figuren 9 und 10 gezeigt ist.

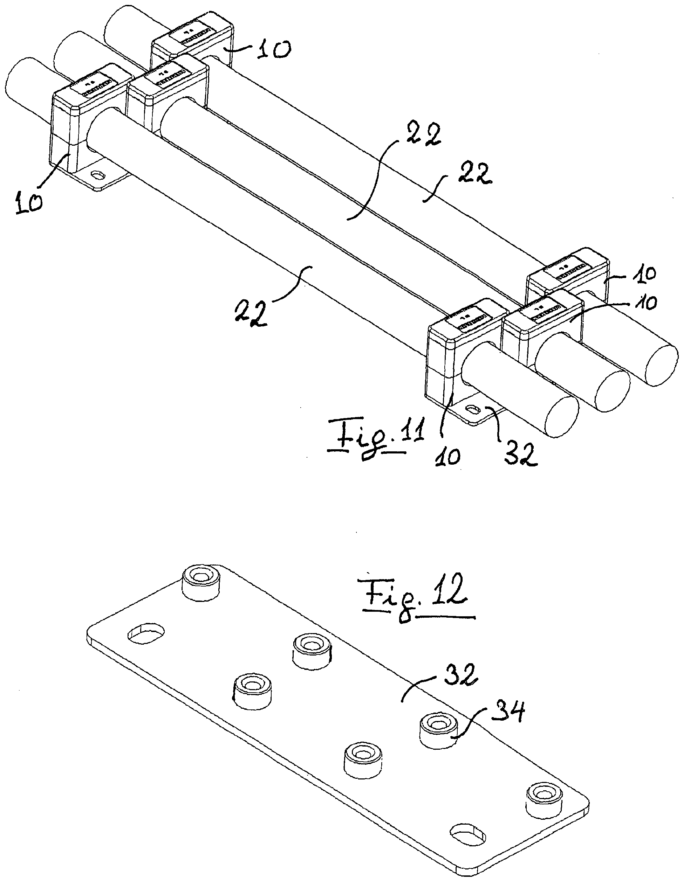

Die Schelle 10 wird auf einer Befestigungsplatte 32, welche entsprechende Muttern 34 aufweist, angebracht und mittels den Aufbauschrauben 16 an dieser befestigt, so dass die Schelle 10 zusammen mit der Befestigungsplatte 32 in einer Baumaschine montierbar ist. In den Figuren 11 und 12 sind jeweils Befestigungsplatten 32' gezeigt, auf denen mehrere Schellen 10 nebeneinander montiert sind.

In Figur 1 sind zwei Schellen 10, 10' gezeigt, welche zusammen eine Schellenanordnung bilden. Die beiden Schellen 10, 10' sind über die Aufbauschrauben 16 miteinander verbindbar. Die Aufbauschraube 16 ist in einer vergrößerten Darstellung in Figur 2 gezeigt. Diese weist einen Schraubenkopf auf, welcher aus einem Zylinder 24 und einem Mehrkant, in dieser Ausführung einem Sechskant, besteht. Dabei geht der Zylinder 24 in den Mehrkant 26 über, wobei der Zylinder einen Innengewinde aufweist, zur Befestigung der Aufbauschraube 16' der weiteren mit der ersten Schelle 10 verbundenen Schelle 10'. Somit können beliebig weitere Schellen miteinander verbunden werden. An ihrem dem Schraubenkopf gegenüber liegendem Ende weist die Aufbauschraube 16 ein Schraubgewinde 31 auf.

Wie aus Figur 1 ersichtlich, ist eine Abdeckung 38 vorgesehen, die auf einer Auflagefläche 36 des oberen Klemmkörpers 14' der oberen Schelle 10' aufsteckbar ist. Dabei ist die Verbindung eine Steckverbindung. Wie in Figur 3 gezeigt, sind auf der Innenseite der Abdeckung 38 zwei Innenmehrkant 44 ausgebildet, die derart dimensioniert sind, dass sie mit dem jeweiligen Schraubenkopf 24, 26 der Aufbauschraube 16 die Schnappverbindung bilden. Die Abdeckung 38 weist an den beiden Seiten je eine Ausnehmung 46 auf, so dass sie leicht abgenommen werden kann.

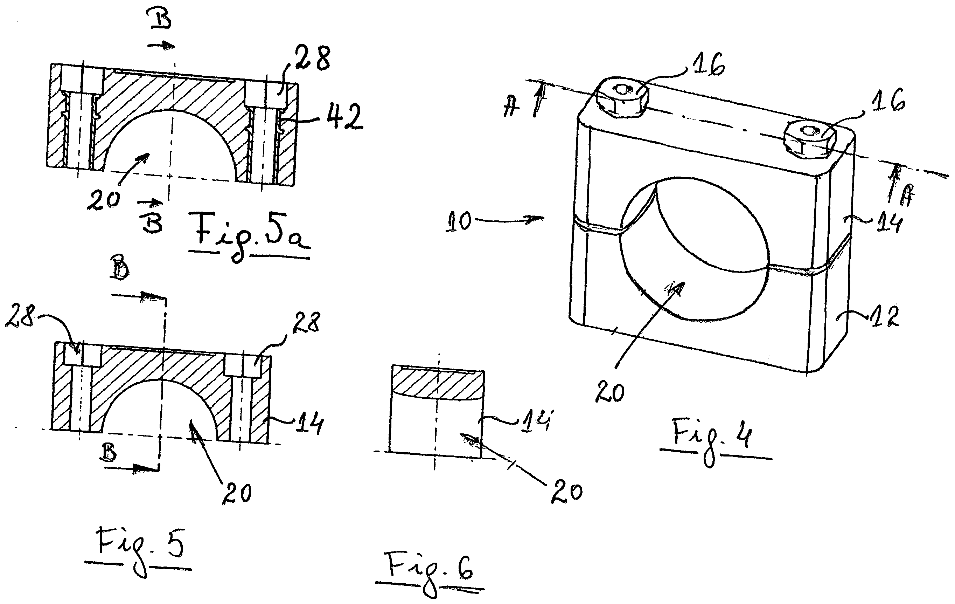

Figur 4 zeigt die erfindungsgemäße Schelle 10 in perspektivischer Ansicht mit den Aufbauschrauben 16. Figur 5 zeigt einen Schnitt entlang der Linie A-A der Schelle 10 gemäß Figur 4, jedoch ohne Aufbauschrauben. Die Innenkantöffnungen 28, welche beidseitig der Durchgangsöffnung 20 ausgebildet sind, sind hier deutlich zu sehen. In diesen mündet teilweise der Innenkant 44 der Aufbauschraube 16.

Aus Figur 4 ist ersichtlich, dass die Innenfläche der Durchgangsöffnung 20 einen elliptischen Querschnitt entlang der Längsachse aufweist. Dieser ist in Figur 6, die einen Schnitt entlang der Linie B-B gemäß Figur 5 zeigt verdeutlicht.

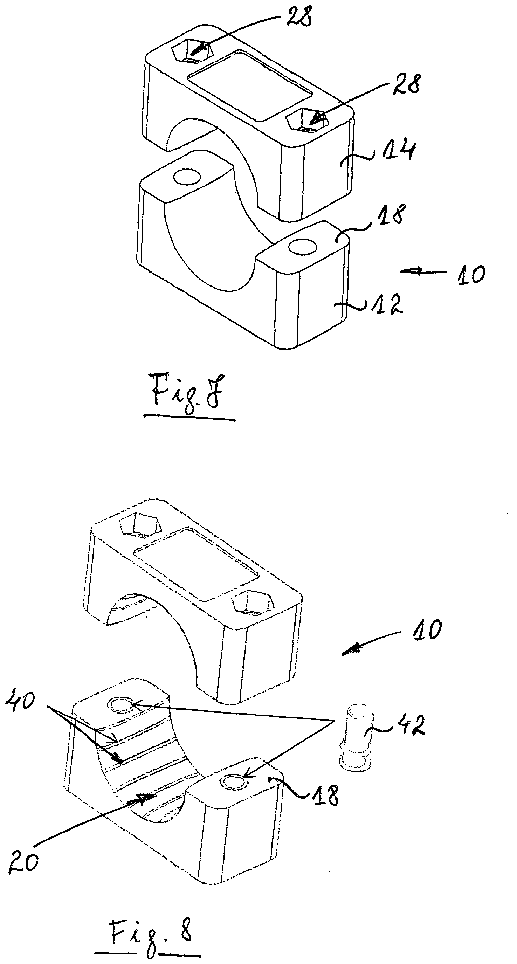

Figur 7 zeigt eine perspektivische Darstellung der erfindungsgemäßen Schelle 10 gemäß einer ersten Ausführungsform. Aus dieser sind die beiden Klemmkörper 12, 14 der Schelle 10 mit den Öffnungen für das Hinzuführen der Aufbauschrauben 16 gezeigt, wobei der obere Klemmkörper 14 die zwei Innenkantöffnungen 28 aufweist.

Figur 8 zeigt eine perspektivische Darstellung der erfindungsgemäßen Schelle 10 gemäß einer zweiten Ausführungsform. Die Öffnung 20 der Schelle 10 ist mit Rillen 40 versehen. Auf einer oberen Auflagefläche 18 des Klemmkörpers 12 sind zwei Metallhülsen 42 zu erkennen. Diese sind in einer Explosionsdarstellung neben der Schelle10 nochmals perspektivisch dargestellt. Ihre Einbausituation ergibt sich aus der Figur 5a. Die Metallhülsen 42 dienen als Verstärkung und auch als Abstandhalter, die ein Zusammendrücken der beiden aus elastomeren Material bestehenden Klemmkörper 12, 14 verhindern.

Figur 9 zeigt eine Rohrleitung 22, die von zwei erfindungsgemäßen Schellen 10 an beiden Enden festgelegt wird. Figur 10 zeigt eine weitere Anordnung mit zwei parallel zu einander verlaufenden Rohrleitungen 22, die von einer Schellenanordnung mit je zwei aufeinander angebrachten und miteinander in Verbindung stehenden Schellen 10, 10' festgelegt werden.

Die erfindungsgemäße Schelle bzw. Schellenanordnung zeichnet sich mit einer hohen Stabilität und Korrosionsbeständigkeit aus, wobei der Aufbau im Vergleich zu den herkömmlichen Schellen wesentlich vereinfacht wird.

## Patentansprüche

1. Schelle, insbesondere eine Kunststoffschelle (10), zur Befestigung von mindestens einer Schlauch- und/oder Rohrleitung (22) oder Ähnlichem mit einer Längsachse, mit zwei identischen Klemmkörpern (12, 14), die miteinander mittels Aufbauschrauben (16) verbindbar sind, wobei die Klemmkörper (12, 14) aneinander angrenzende Auflageflächen (18) aufweisen, zwischen welchen eine Durchgangsöffnung (20) zum Hineinführen und Befestigen der mindestens einen Schlauch- und/oder Rohrleitung (22) gebildet ist,
**dadurch gekennzeichnet, dass** die Durchgangsöffnung (20) der Schelle (10) eine Innenfläche aufweist, die einen elliptischen Querschnitt entlang der Längsachse aufweist, wobei die Aufbauschrauben (16) einen Schraubenkopf aufweisen, der aus je einem Zylinder (24), welcher in einen Mehrkant (26) übergeht, besteht und die Klemmkörper (12, 14) korrespondierende Innenmehrkant-Öffnungen (28) aufweisen.

2. Schelle nach Anspruch 1, **dadurch gekennzeichnet, dass** die Klemmkörper (12, 14) der Schelle (10) aus elastomerem Material bestehen.

3. Schelle nach einem der Ansprüche 1 oder 2, **dadurch gekennzeichnet, dass** die Durchgangsöffnung (20) mit Rillen (40) versehen ist, wobei sich die Rillen (40) in Axialrichtung der zu befestigenden Schlauch- und/oder Rohrleitung (22) hin erstrecken.

4. Schelle nach einem der vorhergehenden Ansprüche, **dadurch gekennzeichnet, dass** sich die Aufbauschrauben (16) teilweise von einer Auflagefläche (36) des Klemmkörpers (12; 14) hinaus erstreckten, so dass eine weitere Schelle (10) an die erste anbringbar und befestigbar ist.

5. Schelle nach einem der vorhergehenden Ansprüche, **dadurch gekennzeichnet, dass** die Aufbauschrauben (16) im Bereich des Schraubenkopfes (24, 26) je eine Öffnung (30) mit einem Innengewinde zur Befestigung einer weiteren Schelle (10) mittels Aufbauschrauben (16) aufweisen.

6. Schelle nach einem der vorhergehenden Ansprüche, **dadurch gekennzeichnet, dass** die Schelle (12) auf einer Befestigungsplatte (32) anbringbar und mittels der Aufbauschrauben (16) befestigbar ist, wobei die Befestigungsplatte (32) entsprechende Muttern (34) aufweist.

7. Schelle nach einem der vorhergehenden oberen Ansprüche, **dadurch gekennzeichnet, dass** auf einer Auflagefläche (36) des oberen Klemmkörpers (14) der Schelle (10) eine Abdeckung (38) anbringbar ist, wobei die Verbindung eine Schnappverbindung ist.

8. Schelle nach Anspruch 7, **dadurch gekennzeichnet, dass** auf der Innenseite der Abdeckung (38) zwei Innenmehrkant (44) ausgebildet sind, die mit den von der Auflagefläche (36) des oberen Klemmkörpers (14) hinausragenden Mehrkant (26) der Aufbauschrauben (16) die Schnappverbindung bilden.

9. Schelle nach einem der vorhergehenden Ansprüche, **dadurch gekennzeichnet, dass** zumindest einer der Klemmkörper (12; 14) von seiner Auflagefläche (18) ausgehend je eine integrierte Metallhülse (42), zum Hineinführen der Aufbauschraube (16), aufweist.

## Claims

1. Clamp, in particular a plastic clamp (10), for fastening at least one hose- and/or pipe-line (22) or similar with a longitudinal axis with two identical clamping bodies (12, 14), which are connectable to another by means of abutment screws (16), wherein the clamping bodies (12, 14) comprise adjacent bearing surfaces (18), between which a through-opening (20) for introducing and fastening the at least one hose- and/or pipe-line (22) is formed,
**characterized in that** the through-opening (20) of the clamp (10) comprises an inner surface, which has an elliptical cross-section along the longitudinal axis, wherein the abutment screws (16) comprise a screw head, which in each case consists of a cylinder (24), which merges into a polygon (26), and the clamping bodies (12, 14) comprise corresponding inner polygonal socket openings (28).

2. The clamp according to claim 1, **characterized in that** the clamping bodies (12, 14) of the clamp (10) consist of elastomeric material.

3. The clamp according to one of the claims 1 or 2, **characterized in that** the through-opening (20) is provided with grooves (40), wherein the grooves (40) extend in axial direction towards the hose- and/or pipe-line (22) to be fastened.

4. The clamp according to one of the preceding claims, **characterized in that** the abutment screws (16) partially extended out of a bearing surface (36) of the clamping body (12; 14), so that a further clamp (10) can be attached and fastened to the first one.

5. The clamp according to one of the preceding claims, **characterized in that** the abutment screws (16), in the region of the screw head (24, 26), each comprise an opening (30) with a female thread for fastening a further clamp (10) by means of abutment screws (16).

6. The clamp according to one of the preceding claims, **characterized in that** the clamp (12) can be attached onto a fastening plate (32) and is fastenable by means of the abutment screws (16), wherein the fastening plate (32) comprises corresponding nuts (34).

7. The clamp according to one of preceding claims above, **characterized in that** a covering (38) can be attached onto a bearing surface (36) of the upper clamping body (14) of the clamp (10), wherein the connection is a snap connection.

8. The clamp according to claim 7, **characterized in that** two polygonal sockets (44) are formed on the inner side of the covering (38), which sockets, together with the polygon (26) of the abutment screws (16) protruding from the bearing surface (36) of the upper clamping body (14), form the snap connection.

9. The clamp according to one of the preceding claims, **characterized in that** at least one of the clamping bodies (12, 14) comprises in each case one integrated metal sleeve (42) originating from its bearing surface (18) for guiding-in the abutment screw (16).

## Revendications

1. Bride de fixation, notamment une bride de fixation (10) en matière plastique, destinée à fixer au moins un tuyau et/ou une conduite (22) ou similaire, comprenant un axe longitudinal, comprenant deux corps de serrage (12, 14) identiques, qui peuvent être reliés entre eux au moyen de vis de montage (16), les corps de serrage (12, 14) présentant des surfaces d'appui (18) adjacentes les unes aux autres, entre lesquelles est formée une ouverture de passage (20) pour insérer et fixer l'au moins un tuyau et/ou conduite (22),
**caractérisée en ce que** l'ouverture de passage (20) de la bride de fixation présente une surface intérieure qui présente le long de l'axe longitudinal une section transversale elliptique, les vis de montage (16) présentant une tête de vis qui est constituée de respectivement un cylindre (24), lequel se transforme en un polygone (26), et les corps de serrage (12, 14) présentant des ouvertures polygonales internes (28) correspondantes.

2. Bride de fixation selon la revendication 1, **caractérisée en ce que** les corps de serrage (12, 14) de la bride de fixation (10) sont constitués de matière élastomère.

3. Bride de fixation selon l'une quelconque des revendications 1 ou 2, **caractérisée en ce que** l'ouverture de passage (20) est munie de rainures (40), les rainures (40) s'étendant en direction axiale du tuyau à fixer et/ou de la conduite (22) à fixer.

4. Bride de fixation selon l'une quelconque des revendications précédentes, **caractérisée en ce que** les vis de montage (16) s'étendent en partie en sortant d'une surface d'appui (36) du corps de serrage (12, 14) de sorte qu'une bride de fixation supplémentaire (10) peut être posée et fixée sur la première.

5. Bride de fixation selon l'une quelconque des revendications précédentes, **caractérisée en ce que** les vis de montage (16), au niveau de la tête de vis (24, 26), présentent respectivement une ouverture (30) ayant un filetage intérieur pour la fixation d'une bride de fixation (10) supplémentaire au moyen de vis de montage (16).

6. Bride de fixation selon l'une quelconque des revendications précédentes, **caractérisée en ce que** la bride de fixation (12) peut être placée sur une plaque de fixation (32) et être fixée au moyen des vis de montage (16), la plaque de fixation (32) présentant des écrous (34) correspondants.

7. Bride de fixation selon l'une quelconque des revendications précédentes, **caractérisée en ce qu'**un recouvrement (38) peut être placé sur une surface d'appui (36) du corps de serrage (14) supérieur de la bride de fixation (10), la liaison étant une liaison par encliquetage.

8. Bride de fixation selon la revendication 7, **caractérisée en ce que** deux polygones intérieurs (44) sont réalisés sur le côté intérieur du recouvrement (38), lesquels, avec les polygones (26) faisant saillie de la surface d'appui (36) du corps de serrage (14) supérieur des vis de montage (16), forment la liaison par encliquetage.

9. Bride de fixation selon l'une quelconque des revendications précédentes, **caractérisée en ce qu'**au moins un des corps de serrage (12 ; 14), en partant de sa surface d'appui (18), présente respectivement une douille métallique (42) intégrée, destinée à l'insertion de la vis de montage (16).
